(19) Europäisches Patentamt
European Patent Office
Office européen des brevets

(11) EP 2 841 464 B2

(12) NEUE EUROPÄISCHE PATENTSCHRIFT
Nach dem Einspruchsverfahren

(45) Veröffentlichungstag und Bekanntmachung des Hinweises auf die Entscheidung über den Einspruch:
**28.10.2020 Patentblatt 2020/44**

(45) Hinweis auf die Patenterteilung:
**16.09.2015 Patentblatt 2015/38**

(21) Anmeldenummer: **13713391.4**

(22) Anmeldetag: **20.03.2013**

(51) Int Cl.:
***C08K 5/00*** *(2006.01)* ***C08K 5/103*** *(2006.01)*
***C08L 55/02*** *(2006.01)* ***C08L 69/00*** *(2006.01)*
***C08F 257/02*** *(2006.01)* ***C08L 51/04*** *(2006.01)*
***C08K 5/526*** *(2006.01)* ***C08L 25/12*** *(2006.01)*

(86) Internationale Anmeldenummer:
**PCT/EP2013/055800**

(87) Internationale Veröffentlichungsnummer:
**WO 2013/160029 (31.10.2013 Gazette 2013/44)**

# (54) EMULSIONSPOLYMERISAT ENTHALTENDE ZUSAMMENSETZUNGEN MIT VERBESSERTER OBERFLÄCHE NACH WÄRME-FEUCHT-LAGERUNG

EMULSION POLYMER CONTAINING COMPOUNDS WITH IMPROVED SURFACE AFTER STORAGE UNDER WARM AND HUMID STORAGE

COMPOSITIONS CONTENANT DES POLYMÈRES EN ÉMULSION ET PRÉSENTANT UN MEILLEUR ÉTAT DE SURFACE APRÈS STOCKAGE EN MILIEU CHAUD HUMIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2012 EP 12165143**

(43) Veröffentlichungstag der Anmeldung:
**04.03.2015 Patentblatt 2015/10**

(73) Patentinhaber: **Covestro Deutschland AG**
**51373 Leverkusen (DE)**

(72) Erfinder:
- **SEIDEL, Andreas**
  **41542 Dormagen (DE)**
- **DÖBLER, Martin**
  **40593 Düsseldorf (DE)**
- **THIEM, Hans-Jürgen**
  **41539 Dormagen (DE)**

(74) Vertreter: **Levpat**
**c/o Covestro AG**
**Gebäude 4825**
**51365 Leverkusen (DE)**

(56) Entgegenhaltungen:
**EP-B1- 2 219 843**
**WO-A1-2008/064933**
**WO-A1-2011/131727**
**WO-A2-2008/138534**
**WO-A2-2009/071537**
**DE-A1- 10 353 952**
**US-A1- 2010 227 965**
**US-A1- 2010 267 889**

EP 2 841 464 B2

## Beschreibung

Die vorliegende Erfindung betrifft thermoplastische Zusammensetzungen enthaltend im Emulsionspolymerisationsverfahren hergestellte und mit einem Erdalkalisalz, bevorzugt mit Magnesiumsulfat, gefällte vinylaromatische (kautschukmodifizierte) Copolymere, die herstellungsbedingt Reste oder die Gesamtmenge des zur Fällung verwendeten Salzes enthalten, wobei sich die aus den Zusammensetzungen hergestellten Formkörper durch eine verbesserte Oberflächenqualität nach Wärme-Feucht-Lagerung auszeichnen. Vorzugsweise weisen die Formkörper eine unter diesen Bedingungen alterungsstabil visuell Defekt-freie Class A-Oberfläche auf.

Die vorliegende Erfindung betrifft darüber hinaus auch ein Verfahren zur Herstellung der erfindungsgemäßen Zusammensetzungen, die Verwendung der erfindungsgemäßen Zusammensetzungen zur Herstellung von Formkörpern sowie Formkörper, die aus den erfindungsgemäßen Zusammensetzungen hergestellt wurden.

Im Emulsionspolymerisationsverfahren hergestellte vinylaromatische (kautschukmodifizierte) Copolymere enthaltende Zusammensetzungen, die herstellungsbedingt Salzinklusionen enthalten, sind literaturbekannt. Quellen für solche herstellungsbedingten Salzinklusionen sind mannigfaltig, beispielsweise im Emulsionspolymerisationsverfahren als Hilfsstoffe eingesetzte Emulgatorlösungen, Polymerisationsinitiatorlösungen, Pufferlösungen und insbesondere Fällmittellösungen, welche bei der Aufarbeitung des Polymerisats je nach Verfahren im Material verbleiben oder aber nur unvollständig aus dem Material wieder entfernt werden.

Insbesondere traditionelle Aufbereitungsverfahren, wie die zum Beispiel in EP 459 161 B1, DE 2 021 398 und DE 28 15 098 beschriebene Fällung von in Emulsionspolymerisation hergestellten Vinylpolymerisatlatices mittels Zugabe von Säuren und/oder Salzen tragen in erheblichem Ausmaß zu der Salzfracht des finalen Polymers bei, da diese Salze im Allgemeinen durch nachgeschaltete Verfahrensschritte (Wäschen) nur unzureichend beziehungsweise mit hohem Aufwand (Energie und Wasser/Abwasser) wieder aus dem Produkt entfernt werden können. Als Koagulantien werden beispielsweise und bevorzugt wässrige Lösungen von wasserlöslichen Salzen wie beispielsweise Alkali-, Erdalkali- oder Aluminiumchloride, -sulfate, -nitrate, -phosphate, -acetate, -formiate, -aluminate oder - carbonate, besonders bevorzugt Aluminiumchlorid, Calciumchlorid und Magnesiumsulfat-Lösungen, gegebenenfalls in Kombination mit anorganischen oder organischen Säuren wie beispielsweise Salzsäure, Schwefelsäure, Phosphorsäure, Borsäure, Ameisensäure, Essigsäure, Propionsäure und Zitronensäure verwendet.

In der Literatur wird beschrieben, dass solche Salzinklusionen in vinylaromatische kautschukmodifizierte Copolymere enthaltenden Zusammensetzungen zu unerwünschten Effekten führen können. Insbesondere ist dieses bekannt für vinylaromatische Copolymere enthaltende Zusammensetzungen, bei denen das vinylaromatische Copolymer mit einem Erdalkalisalz, bevorzugt ausgewählt aus der Gruppe der Magnesium- und/oder Calciumsulfate oder -chloride, besonders bevorzugt ausgewählt aus Magnesiumsulfat und Calciumchlorid, ganz besonders bevorzugt mit Magnesiumsulfat, in basischem Milieu, das heißt bevorzugt in Abwesenheit einer anorganischen oder organischen Säure gefällt wurde.

Basisch gefällte vinylaromatische kautschukmodifizierte Copolymerisate weisen im Gegensatz zu sauer gefällten den Vorteil auf, daß diese bei Verarbeitung in einem Polycarbonatblend unter Verwendung saurer Stabilisatoren weniger stark zur Hydrolyse und Verarbeitungsinstabilität beitragen (vgl. EP 2373743).

WO 2009/071537 beispielsweise offenbart, dass Magnesium- und/oder Calciumverbindungen in schlagzähmodifizierten vinylaromatischen Copolymeren ausgewählt aus der Gruppe der Acrylnitril-Butadien-Styrol-Copolymere (ABS), Acrylnitril-Styrol-Acrylat-Copolymere (ASA) und Methacrylat-Acrylnitril-Butadien-Styrol-Copolymere (MABS), optional enthaltend Polycarbonat und Zusatzstoffe, bei der thermoplastischen Formgebung durch Spritzguss oder Extrusion zu unerwünschter Belagsbildung am Formgebungswerkzeug führen und beansprucht insofern solche Zusammensetzungen mit einem Gehalt an Magnesium- und/oder Calciumverbindungen von 0 mg/kg bis 100 mg/kg. Die in diesen Zusammensetzungen zum Einsatz kommenden Emulsionspolymerisate werden statt durch Zugabe von Magnesiumsulfatlösung wie traditionell üblich durch Gefrierfällung auf einer Scherbeneismaschine gefällt.

WO 98/28344 offenbart ein Verfahren zur kontinuierlichen Koagulation von wässrigen Dispersionen von Pfropfkautschuken durch Scherung, welches den bekannten Nachteil der Fällung mittels Säuren und/oder Salzen als Koagulantien, dass oft Verunreinigungen in den aufgearbeiteten Polymeren verbleiben, die zu einer Beeinträchtigung der Produkteigenschaften führen können, überwindet.

Ein Problem von thermoplastischen Zusammensetzungen enthaltend im Emulsionspolymerisationsverfahren hergestellte vinylaromatische Copolymere mit herstellungsbedingten Salzinklusionen ist es, dass aus ihnen hergestellte Formteile bei Exposition gegenüber Feuchtigkeit (beispielsweise Kondenswasser oder Luftfeuchte), insbesondere bei erhöhten Temperaturen, zur unerwünschten Ausbildung von Oberflächendefekten (Bläschenbildung) neigen, welche den Einsatz solcher Zusammensetzungen in Formteilen mit Hochglanz-Finish und Class A-Oberflächenanforderung einschränken.

Die Aufgabe der vorliegenden Erfindung bestand somit darin, thermoplastische Zusammensetzungen, enthaltend im Emulsionspolymerisationsverfahren hergestellte vinylaromatische kautschukmodifizierte Copolymere bereitzustellen, bei denen das vinylaromatische kautschukmodifizierte Copolymer mit mindestens einem Erdalkalisalz, ausgewählt aus der Gruppe der Magnesiumsulfate, Calciumsulfate, Magnesiumchloride und Calciumchloride, besonders bevorzugt ausgewählt aus Magnesiumsulfat und Calciumchlorid, ganz besonders bevorzugt mit Magnesiumsulfat, in basischem Milieu, bevorzugt in Abwesenheit einer anorganischen oder organischen Säure gefällt wurde, wobei sich die thermoplastischen Zusammensetzungen trotz herstellungsbedingt im Emulsionspolymerisat verbleibender Salzfracht durch eine verbesserte Oberflächenqualität der aus ihnen hergestellten Formkörpern nach Wärme-Feucht-Lagerung bei 40°C und 95% relativer Luftfeuchte, in bevorzugter Ausführungsform auch bei 90°C und 95% relativer Luftfeuchte, auszeichnen und sich zur Herstellung von Formkörpern mit unter diesen Bedingungen alterungsstabiler Class A-Oberfläche ohne visuell störende, bevorzugt ohne visuell sichtbare Blasendefekte eignen.

Unter visuell nicht störenden Blasendefekte werden solche verstanden, die hinsichtlich Größe und Dichte gemäß DIN EN ISO 4628-2 zu einer Bewertung von "1S1" führen. Oberflächen ohne visuell sichtbare Blasendefekte sind solche, die gemäß DIN EN ISO 4628-2 mit der Bewertung "0" bewertet werden.

Unter Oberflächen mit visuell nicht störenden Blasendefekten werden im Rahmen der vorliegenden Erfindung bevorzugt solche Oberflächen verstanden, die keine Bläschen mit einem Durchmesser von größer als 300 μm, bevorzugt größer als 240 μm, besonders bevorzugt von größer als 200 μm aufweisen.

Überraschenderweise wurde nun gefunden, dass Polymerzusammensetzungen diese Aufgabe erfüllen, bestehend aus

A) 30 bis 85 Gew.-Teile, bezogen auf die Summe aus A und B, eines oder eine Mischung mehrerer thermoplastischer Polymere verschieden von B und

B) 15 bis 70 Gew.-Teile, bezogen auf die Summe aus A und B, aus

B1) mindestens einem im Emulsionspolymerisationsverfahren hergestellten Pfropfpolymerisat,
B2) optional mindestens einem im Masse-, Suspensions- oder Lösungspolymerisationsverfahren hergestellten Pfropfpolymerisat,
B3) optional mindestens einem kautschukfreien Vinyl(co)polymerisat, und

C) 0,3 bis 7 Gew.-Teile, bezogen auf die Summe auf A und B, mindestens eines handelsüblichen Polymeradditivs,

wobei sich die Summe der Gewichtsteile A und B zu 100 addiert,
dadurch gekennzeichnet, dass

(i) das im Emulsionspolymerisationsverfahren hergestellte Pfropfpolymerisat gemäß Komponente B1 mit mindestens einem Erdalkalisalz ausgewählt aus der Gruppe der Magnesiumoder Calciumsalze, bevorzugt ausgewählt aus der Gruppe bestehend aus Magnesiumsulfat, Magnesiumchlorid, Calciumsulfat und Calciumchlorid, besonders bevorzugt ausgewählt aus der Gruppe bestehend aus Magnesiumsulfat und Calciumchlorid, am stärksten bevorzugt mit Magnesiumsulfat, in basischem Milieu (pH > 7), das heißt bevorzugt ohne Zusatz einer anorganischen oder organischen Brönsted-Säure im Fällungsschritt, gefällt wurde, und
(ii) das im Emulsionspolymerisationsverfahren hergestellte Pfropfpolymerisat gemäß Komponente B1 herstellungsbedingt mindestens ein Natriumsalz und mindestens ein Erdalkalisalz nach (i), bevorzugt ein Natriumsalz und ein Magnesiumsalz enthält, wobei die Metallionen im molaren Verhältnis Na/(Mg+Ca), bzw. in bevorzugter Ausführungsform im molaren Verhältnis Na/Mg, von mindestens 0,15, besonders bevorzugt mindestens 0,20, insbesondere mindestens 0,25, vorliegen. Das jeweilige molare Verhältnis beträgt maximal 0,5, wobei die Komponente B1 mehr als 100 ppm und weniger als 2000 ppm Magnesium und/oder Calcium enthält,
wobei die Magnesium- oder Calciumsalze ausgewählt sind aus der Gruppe der Sulfate und Chloride,
wobei die Komponente B aus mindestens zwei Komponenten ausgewählt aus der Gruppe bestehend aus B1, B2 und B3 besteht,
wobei das thermoplastische Polymer gemäß Komponente A ausgewählt ist aus der Gruppe, die Polycarbonate, Polyestercarbonate, Polyester sowie Mischungen daraus umfasst.

Das molare Verhältnis aus Na/(Mg+Ca) bzw. Na/Mg wird ermittelt gemäß der Formeln

Na/(Mg+Ca) = (Gehalt an Na in ppm / Molare Masse von Na) / [ (Gehalt an Mg in ppm / Molare Masse von Mg) + (Gehalt an Ca in ppm / Molare Masse von Ca) ]

beziehungsweise

Na/Mg = (Gehalt an Na in ppm / Molare Masse von Na) / (Gehalt an Mg in ppm / Molare Masse von Mg) .

Die Zusammensetzung besteht nur aus den Komponenten A, B und C.

Die Komponente B besteht aus mindestens zwei Komponenten ausgewählt aus der Gruppe bestehend aus B1, B2 und B3, weiter bevorzugt aus den Komponenten B1 und B3, besonders bevorzugt aus B1, B2 und B3.

Die Erdalkalisalze werden bei der Herstellung der Komponente B1 bevorzugt im Wesentlichen über den Fällprozess als Fällmittel in das Verfahren und somit ins Produkt eingebracht und in den nachfolgenden Aufarbeitungsschritten (Filtration, Dekantieren und/oder Zentrifugation des Koagulat/Wasser-Gemisches, Waschen des Koagulats, Trocknen des Koagulats) nicht oder nicht vollständig wieder aus dem Produkt entfernt.

Das Natrium wird bei der Herstellung der Komponente B1 bevorzugt in Form eines Natriumsalzes als Prozesshilfsmittel in mindestens einem Verfahrensschritt, der vor der Abtrennung des Wassers vom mit dem Erdalkalisalz gefällten Koagulat des Emulsionspolymerisats erfolgt, in das Verfahren eingebracht. Beispielsweise kann dieses in einem der Fällung vorgeschalteten Verfahrensschritt wie der Kautschuk- und/oder Pfropfungspolymerisation und/oder bei der Fällung selbst (gemeinsam mit dem Erdalkalisalz) und/oder nach Zugabe des Fällungsmittels aber zeitlich noch vor der Abtrennung des Wassers vom Koagulat des Emulsionspolymerisats geschehen.

Das Natriumsalz ist ein beliebiges Natriumsalz oder eine Mischung beliebiger Natriumsalze. Als Natriumsalze können beispielsweise zum Einsatz kommen Halogenide, Sulfate, Phosphate, Nitrate und Carbonate. Bevorzugt ist das Natriumsalz ausgewählt aus mindestens einem Vertreter der Gruppe bestehend aus den Salzen der Salz-, Schwefel- und Phosphorsäure. Besonders bevorzugt ist das Natriumsalz ausgewählt aus Natriumchlorid und Natriumsulfat.

Solche Natriumsalze können auch bei der Fällung aus im Emulsionspolymerisationsverfahren zum Einsatz kommenden Natriumsalzen von Emulgatoren durch Reaktion mit den zur Fällung eingesetzten Erdalkalisalzen entstehen.

In besonders bevorzugter Ausführungsform erfolgt die Fällung mit einer Mischsole enthaltend mindestens ein Erdalkali- und mindestens ein Natriumsalz, in besonders bevorzugter Ausführungsform mit einer Mischsole enthaltend Magnesiumsulfat und mindestens ein Salz ausgewählt aus Natriumchlorid und/oder Natriumsulfat, in weiter bevorzugter Ausführungsform mit einer Mischsole enthaltend Magnesiumsulfat und Natriumsulfat.

Die Erdalkalisalze werden bei der Fällung bevorzugt als wäßrige Lösungen (Solen) eingesetzt, die keine festen Bestandteile mehr aufweisen.

Sofern die Natriumkonzentration im gefällten Produkt zu gering ist, kann der Natriumanteil im Fällmittel (Mischsole) erhöht werden.

In einer alternativen, ebenso bevorzugten Ausführungsform wird das Emulsionspolymerisat zunächst mit einer Sole des Erdalkalisalzes gefällt und in einem nachgeschalteten Verfahrensschritt eine Sole eines Natriumsalzes hinzugegeben, noch bevor das Koagulat vom Wasser durch Trocknung getrennt wird. Ein solches Vorgehen ist insbesondere dann vorteilhaft und bevorzugt, wenn als Natriumsalz ein Salz mit einem Anion zum Einsatz kommt, welches mit dem in der Fällung des Emulsionspolymerisats zum Einsatz kommenden, im allgemeinen gut wasserlöslichen Erdalkalisalz ein schwerlösliches und bevorzugt nicht hygroskopisches Magnesiumsalz bilden kann. Beispielsweise und bevorzugt sind dieses Natriumsalze der Phosphorsäure, besonders bevorzugt Natriumphosphat und/oder Dinatriumhydrogenphosphat.

Die Trocknung des Koagulats des Emulsionspolymerisats kann beispielsweise erfolgen durch Zentrifugation, mechanisches Abquetschen des Wasser, durch Wärmetrocknung beispielsweise in warmer Luft oder in warmen Inertgas, durch Sprühtrocknung, durch Compoundierung mit einer Polymerschmelze, beispielsweise eines kautschukfreien Vinyl(co)polymerisats gemäß Komponente B3, mit Entgasung der Schmelze des Compounds im Vakuum oder durch eine Kombination mehrerer dieser Verfahren.

Das im Emulsionspolymerisationsverfahren hergestellte Pfropf-polymerisat gemäß Komponente B1 enthält herstellungsbedingt mehr als 100 ppm, bevorzugt mehr als 200 ppm insbesondere enthält mehr als 400 ppm Magnesium und/oder Calcium. Das im Emulsionspolymerisationsverfahren hergestellte Pfropfpolymerisat gemäß Komponente B1 enthält herstellungsbedingt weniger als enthält 2000 ppm, insbesondere bevorzugt weniger als 1500 ppm, ganz besonders bevorzugt weniger als 1000 ppm Magnesium und/oder Calcium.

Der Gehalt an Alkali- und Erdalkali wird wie folgt bestimmt:

> Etwa 200 mg der zu untersuchenden Probe werden eingewogen und Salpetersäure (5 mL) aufgeschlossen. Der Aufschluß wird mikrowellengestützt bei ca. 200 bar (Gesamtdruck des Aufschlußsystems) und ca. 220° durchgeführt. Die erhaltene Lösung wird mit Millipore-Wasser verdünnt und anschließend mittels ICP-OES (Induktiv-Gekoppeltes-Plasma Optische-Emissions-Spektroskopie) gemessen. Zur Quantifizierung wird eine Kalibrierreihe durch Verdünnung zertifizierter Referenzmaterialien erstellt.

**Komponente A**

Als Komponente A kommt mindestens ein Polymer ausgewählt aus der Gruppe bestehend aus Polycarbonat, Polyestercarbonat und Polyester, besonders bevorzugt mindestens ein Polymer ausgewählt aus der Gruppe bestehend aus aromatischem Polycarbonat, aromatischem Polyestercarbonat und aromatischem Polyester, ganz besonders bevorzugt ein Polymer ausgewählt aus der Gruppe bestehend aus aromatischem Polycarbonat und aromatischem Polyestercarbonat zum Einsatz.

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A2 232 877, DE-A2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

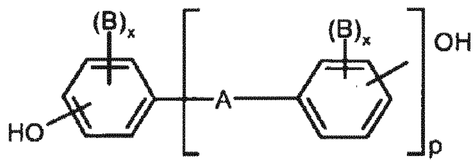

(I),

wobei

A eine Einfachbindung, C1 bis C5-Alkylen, C2 bis C5-Alkyliden, C5 bis C6-Cycloalkyliden, -O-, -SO-, -CO-, -S-, -SO2-, C6 bis C12-Arylen, an das weitere aromatische gegebenenfalls Heteroatome enthaltende Ringe kondensiert sein können,
oder ein Rest der Formel (II) oder (III)

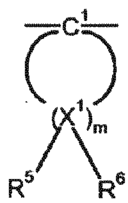

(II)

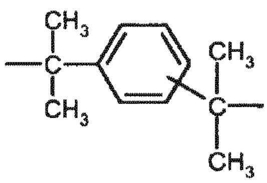

(III)

B jeweils C1 bis C12-Alkyl, vorzugsweise Methyl, Halogen, vorzugsweise Chlor und/oder Brom

x jeweils unabhängig voneinander 0, 1 oder 2,

p 1 oder 0 sind, und

R5 und R6 für jedes X1 individuell wählbar, unabhängig voneinander Wasserstoff oder C1 bis C6-Alkyl, vorzugsweise Wasserstoff, Methyl oder Ethyl,

X1 Kohlenstoff und

m eine ganze Zahl von 4 bis 7, bevorzugt 4 oder 5 bedeuten, mit der Maßgabe, dass an mindestens einem

Atom X1, R5 und R6 gleichzeitig Alkyl sind.

Bevorzugte Diphenole sind Hydrochinon, Resorcin, Dihydroxydiphenole, Bis-(hydroxyphenyl)-C1-C5-alkane, Bis-(hydroxyphenyl)-C5-C6-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxy-phenyl)-diisopropyl-benzole sowie deren kernbromierte und/oder kemchlorierte Derivate.

Besonders bevorzugte Diphenole sind 4,4'-Dihydroxydiphenyl, Bisphenol-A, 2,4-Bis(4-hydroxy-phenyl)-2-methylbutan, 1,1-bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,1,3,3-Tetiamethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechem beträgt im allgemeinen zwischen 0,5 Mol%, und 10 Mol%, bezogen auf die Molsumme der jeweils eingesetzten Diphenole.

Die thermoplastischen, aromatischen Polycarbonate haben bevorzugt mittlere Gewichtsmittel-molekulargewichte (Mw, gemessen durch Gelpermeationschromatographie in Methylenchlorid bei 25°C mit Polycarbonat als Standard) von 20.000 bis 40.000 g/mol, vorzugsweise 22.000 bis 35.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C1 bis C22-Alkylgruppen oder durch Halogenatome substituiert sein können, sowie aliphatische C2 bis C22-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Naphthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyt]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

**Komponenten B1**

Bei der Komponente B1 handelt es sich um Pfropfpolymerisate, hergestellt im Emulsionspolymerisationsverfahren, von in bevorzugter Ausführungsform,

B1.1) 5 bis 95 Gew.-%, vorzugsweise 10 bis 70 Gew.-%, besonders bevorzugt 20 bis 60 Gew.-%, bezogen auf die Komponente B1, einer Mischung aus

B1.1.1) 65 bis 85 Gew.-%, bevorzugt 70 bis 80 Gew.-%, bezogen auf B1.1, mindestens eines Monomeren ausgewählt aus der Gruppe der Vinylaromaten (wie beispielsweise Styrol, $\alpha$-Methylstyrol), kernsubstituierten Vinylaromaten (wie beispielsweise p-Methylstyrol, p-Chlorstyrol) und Methacrylsäure-(C1-C8)-Alkylester (wie beispielsweise Methylmethacrylat, Ethylmethacrylat) und

B1.1.2) 15 bis 35 Gew.-%, bevorzugt 20 bis 30 Gew.-%, bezogen auf B1.1, mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat) und Derivate (wie beispielsweise Anhydride und Imide) ungesättigter Carbonsäuren (beispielsweise Maleinsäureanhydrid und N-Phenyl-Maleinimid)

auf

B1.2) 95 bis 5 Gew.-%, vorzugsweise 90 bis 30 Gew.-%, besonders bevorzugt 80 bis 40 Gew.-%, bezogen auf die Komponente B1, wenigstens einer elastomeren Pfropfgrundlage.

Die Pfropfgrundlage hat bevorzugt eine Glasübergangstemperatur < 0°C, weiter bevorzugt < -20°C, besonders bevorzugt <-60°C.

Glasübergangstemperaturen werden, soweit in der vorliegenden Erfindung nicht anders angegeben, mittels dynamischer Differenzkalorimetrie (DSC) gemäß der Norm DIN EN 61006 bei einer Heizrate von 10 K/min mit Definition der Tg als Mittelpunkttemperatur (Tangentenmethode) und Stickstoff als Schutzgas bestimmt.

Die Pfropfpartikel in der Komponente B1 weisen bevorzugt eine mittlere Teilchengröße (D50-Wert) von 0,05 bis 5 $\mu$m, vorzugsweise von 0,1 bis 1,0 $\mu$m, besonders bevorzugt von 0,2 bis 0,5 $\mu$m auf.

Die mittlere Teilchengröße D50 ist der Durchmesser, oberhalb und unterhalb dessen jeweils 50 Gew.% der Teilchen liegen. Sie wird, soweit in der vorliegenden Anmeldung nicht explizit anders angegeben, mittels Ultrazentrifugenmessung (W. Scholtan, H. Lange, Kolloid, Z. und Z. Polymere 250 (1972), 782-1796) bestimmt.

Bevorzugte Monomere B1.1.1 sind ausgewählt aus mindestens einem der Monomere Styrol, $\alpha$-Methylstyrol und Methylmethacrylat, bevorzugte Monomere B1.1.2 sind ausgewählt aus mindestens einem der Monomere Acrylnitril, Maleinsäureanhydrid und Methylmethacrylat.

Besonders bevorzugte Monomere sind B1.1.1 Styrol und B1.1.2 Acrylnitril.

Für die Pfropfpolymerisate B1 geeignete Pfropfgrundlagen B1.2 sind beispielsweise Dienkautschuke, Dien-Vinyl-Blockcopolymer-Kautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Mischungen aus solchen Kautschuken bzw. Silikon-Acrylat-Kompositkautschuke, in denen die Silikon- und die Acrylatkomponenten chemisch miteinander (z.B. durch Pfropfung) verknüpft sind.

Bevorzugte Pfropfgrundlagen B1.2 sind Dienkautschuke (z.B. auf Basis von Butadien oder Isopren), Dien-Vinyl-Blockcopolymer-Kautschuke (z.B. auf Basis von Butadien- und Styrolblöcken), Copolymerisate von Dienkautschuken mit weiteren copolymerisierbaren Monomeren (z.B. gemäß B1.1.1 und B1.1.2) und Mischungen aus den zuvor

genannten Kautschuktypen. Besonders bevorzugt sind reiner Polybutadienkautschuk und Styrol-Butadien-Blockcopolymerkautschuk.

Der Gelanteil der Pfropfpolymerisate beträgt mindestens 40 Gew.-%, bevorzugt mindestens 60 Gew.%, besonders bevorzugt mindestens 75 Gew.-% (gemessen in Aceton).

Der Gelgehalt der Pfropfpolymerisate wird, soweit in der vorliegenden Erfindung nicht anders angegeben, bei 25°C als in Aceton als Lösungsmittel unlöslicher Anteil bestimmt (M. Hoffmann, H. Krömer, R. Kuhn, Polymeranalytik I und II, Georg Thieme-Verlag, Stuttgart 1977).

Die Pfropfpolymerisate B1 werden hergestellt durch radikalische Polymerisation.

Das Pfropfpolymerisat B1 umfasst herstellungsbedingt im Allgemeinen freies, d.h. nicht chemisch an die Kautschukgrundlage gebundenes Copolymerisat aus B1.1.1 und B1.1.2, welches sich dadurch auszeichnet, dass es in geeigneten Lösungsmitteln (z.B. Aceton) gelöst werden kann.

Bevorzugt enthält die Komponente B1 ein freies Copolymerisat aus B 1.1.1 und B1.1.2, welches ein gewichtsgemitteltes Molekulargewicht (Mw), bestimmt per Gelpermeationschromatographie mit Polystyrol als Standard, von bevorzugt 30000 bis 150000 g/mol, besonders bevorzugt von 40000 bis 120000 g/mol aufweist.

## Komponente B2

Als Komponente B2 können die erfindungsgemäßen Zusammensetzungen optional Pfropfpolymerisate, hergestellt im Masse-, Lösungs- oder Suspensionspolymerisationsverfahren enthalten. Hierbei handelt es sich in bevorzugter Ausführungsform um Pfropfpolymerisate von

B2.1) 5 bis 95 Gew.-%, vorzugsweise 80 bis 93 Gew.-%, besonders bevorzugt 85 bis 92 Gew.-%, ganz besonders bevorzugt 87 bis 93 Gew.-%, bezogen auf die Komponente B2, einer Mischung aus

B2.1.1) 65 bis 85 Gew.-%, bevorzugt 70 bis 80 Gew.-%, bezogen auf die Mischung B.2.1, mindestens eines Monomeren ausgewählt aus der Gruppe der Vinylaromaten (wie beispielsweise Styrol, αMethylstyrol), kernsubstituierten Vinylaromaten (wie beispielsweise p-Methylstyrol, p-Chlorstyrol) und Methacrylsäure-(C1-C8)-Alkylester (wie beispielsweise Methylmethacrylat, Ethylmethacrylat) und

B2.12) 15 bis 35 Gew.-%, bevorzugt 20 bis 30 Gew.-% bezogen auf die Mischung B2.1, mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat) und Derivate (wie beispielsweise Anhydride und Imide) ungesättigter Carbonsäuren (beispielsweise Maleinsäureanhydrid und N-Phenyl-Maleinimid) auf

B2.2) 95 bis 5 Gew.-%, vorzugsweise 20 bis 7 Gew.-%, besonders bevorzugt 15 bis 8 Gew.-%, ganz besonders bevorzugt 13 bis 7 Gew.-%, bezogen auf die Komponente B2,

wenigstens einer Pfropfgrundlage.

Die Pfropfgrundlage hat vorzugsweise eine Glasübergangstemperatur < 0°C, bevorzugt < -20°C, besonders bevorzugt < -60°C.

Die Pfropfpartikel in der Komponente B2 weisen bevorzugt eine mittlere Teilchengröße (D50-Wert) von 0,1 bis 10 μm, vorzugsweise von 0,2 bis 2 μm, besonders bevorzugt von 0,3 bis 1,0 μm, ganz besonders bevorzugt von 0,3 bis 0,6 μm auf.

Bevorzugte Monomere B2.1.1 sind ausgewählt aus mindestens einem der Monomere Styrol, α-Methylstyrol und Methylmethacrylat, bevorzugte Monomere B2.1.2 sind ausgewählt aus mindestens einem der Monomere Acrylnitril, Maleinsäureanhydrid und Methylmethacrylat.

Besonders bevorzugte Monomere sind B2.1.1 Styrol und B2.1.2 Acrylnitril.

Für die Pfropfpolymerisate B2 geeignete Pfropfgrundlagen B2.2 sind beispielsweise Dienkautschuke, Dien-Vinyl-Blockcopolymer-Kautschuke, EP(D)M-Kautschuke, also solche auf Basis Ethylen/- Propylen und gegebenenfalls Dien, Acrylat-, Polyurethan-, Silikon-, Chloropren- und Ethylen/Vinylacetat-Kautschuke sowie Mischungen aus solchen Kautschuken bzw. Silikon-Acrylat-Kompositkautschuke, in denen die Silikon- und die Acrylatkomponenten chemisch miteinander (z.B. durch Pfropfung) verknüpft sind.

Bevorzugte Pfropfgrundlagen B2.2 sind Dienkautschuke (z.B. auf Basis von Butadien oder Isopren), Dien-Vinyl-Blockcopolymer-Kautschuke (z.B. auf Basis von Butadien- und Styrolblöcken), Copolymerisate von Dienkautschuken mit weiteren copolymerisierbaren Monomeren (z.B. gemäß B2.1.1 und B2.1.2) und Mischungen aus den zuvor genannten Kautschuktypen. Besonders bevorzugt als Pfropfgrundlage B2.2 sind Styrol-Butadien-Blockcopolymerkautschuke und Mischungen von StyrolButadien-Blockcopolymerkautschuken mit reinem Polybutadienkautschuk.

Der Gelanteil der Pfropfpolymerisate B2 beträgt vorzugsweise 10 bis 35 Gew.-%, besonders bevorzugt 15 bis 30 Gew.-%, ganz besonders bevorzugt 17 bis 23 Gew.-% (gemessen in Aceton).

Besonders bevorzugte Polymerisate B2 sind z.B. ABS-Polymerisate hergestellt durch radikalische Polymerisation, welche in bevorzugter Ausführungsform bis zu 10 Gew.-%, besonders bevorzugt bis zu 5 Gew.-%, ganz besonders bevorzugt 2 bis 5 Gew.-%, jeweils bezogen auf das Pfropfpolymerisat B2, an n-Butylacrylat enthalten.

Das Pfropfpolymerisat B2 umfasst im Allgemeinen herstellungsbedingt freies, d.h. nicht chemisch an die Kautschukgrundlage gebundenes Copolymerisat aus B2.1.1 und B2.1.2, welches sich dadurch auszeichnet, dass es in geeigneten Lösungsmittel (z.B. Aceton) gelöst werden kann.

Bevorzugt enthält die Komponente B2 freies Copolymerisat aus B2.1.1 und B2.1.2, welches ein gewichtsgemitteltes Molekulargewicht (Mw), bestimmt per Gelpermeationschromatographie mit Polystyrol als Standard, von bevorzugt 50000 bis 200000 g/mol, besonders bevorzugt von 70000 bis 150000 g/mol, besonders bevorzugt von 80000 bis 120000 g/mol aufweist.

## Komponente B3

Die Zusammensetzung kann als weitere Komponente B3 optional (Co)Polymerisate von mindestens einem Monomeren aus der Gruppe der Vinylaromaten, Vinylcyanide (ungesättigte Nitrile), (Meth)-Acrylsäure-(C1 bis C8)-Alkylester, ungesättigte Carbonsäuren sowie Derivate (wie Anhydride und Imide) ungesättigter Carbonsäuren enthalten.

Insbesondere geeignet sind als Komponente B3 (Co)Polymerisate aus

B3.1 50 bis 99 Gew.-%, bevorzugt 65 bis 85 Gew.-%, besonders bevorzugt 70 bis 80 Gew.-% bezogen auf das (Co)Polymerisat B3 mindestens eines Monomeren ausgewählt aus der Gruppe der Vinylaromaten (wie beispielsweise Styrol, $\alpha$-Methylstyrol), kernsubstituierten Vinylaromaten (wie beispielsweise p-Methylstyrol, p-Chlorstyrol) und (Meth)Acrylsäure-(C1-C8)-Alkylester (wie beispielsweise Methylmethacrylat, n-Butylacrylat, tert.-Butylacrylat) und

B3.2 1 bis 50 Gew.-%, bevorzugt 15 bis 35 Gew.-%, besonders bevorzugt 20 bis 30 Gew.-% bezogen auf das (Co)Polymerisat B3 mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid).

Diese (Co)Polymerisate B3 sind harzartig, thermoplastisch und kautschukfrei. Besonders bevorzugt ist das Copolymerisat aus B3.1 Styrol und B3.2 Acrylnitril.

Derartige (Co)Polymerisate B3 sind bekannt und lassen sich durch radikalische Polymerisation, insbesondere durch Emulsions-, Suspensions-, Lösungs- oder Massepolymerisation herstellen.

Die (Co)Polymerisate B3 besitzen ein gewichtsgemitteltes Molekulargewicht (Mw), bestimmt per Gelpermeationschromatographie mit Polystyrol als Standard, von bevorzugt 50000 bis 200000 g/mol, besonders bevorzugt von 70000 bis 150000 g/mol, besonders bevorzugt von 80000 bis 130000 g/mol.

## Komponente C

Die Zusammensetzung enthält als Komponente C weiterhin handelsübliche Polymeradditive.

Als handelsübliche Polymeradditive gemäß Komponente C kommen Additive wie beispielsweise Flammschutzmittel (beispielsweise Phosphor- oder Halogenverbindungen), Flammschutzsynergisten (beispielsweise nanoskalige Metalloxide), rauchhemmende Additive (beispielsweise Borsäure oder Borate), Antidrippingmittel (beispielsweise Verbindungen der Substanzklassen der fluorierten Polyolefine, der Silikone sowie Aramidfasem), interne und externe Gleit- und Entformungsmittel (beispielsweise Pentaerythrittetrastearat, Montanwachs oder Polyethylenwax), Fließfähigkeitshilfsmittel (beispielsweise niedermolekulare Vinyl(co)polymerisate), Antistatika (beispielsweise Blockcopolymere aus Ethylenoxid und Propylenoxid, andere Polyether oder Polyhydroxyether, Polyetheramide, Polyesteramide oder Sulfonsäuresalze), Leitfähigkeitsadditive (beispielsweise Leitruß oder Carbon Nanotubes), Stabilisatoren (beispielsweise UV/Licht-Stabilisatoren, Thermostabilisatoren, Antioxidantien, Umesterungsinhibitoren, Hydrolyseschutzmittel), antibakteriell wirkende Additive (beispielsweise Silber oder Silbersalze), kratzfestigkeitsverbessernde Additive (beispielsweise Silikonöle oder harte Füllstoffe wie Keramik(hohl)kugeln oder Quarzpulver), IR-Absorbentien, optische Aufheller, fluoreszierende Additive, Füll- und Verstärkungsstoffe (z.B. Talk, gemahlene Glas- oder Karbonfasern, Glasoder Keramik(hohl)kugeln, Glimmer, Kaolin, $CaCO_3$ und Glasschuppen), Säuren sowie Farbstoffe und Pigmente (beispielsweise Ruß, Titandioxid oder Eisenoxid), oder aber Mischungen mehrerer der genannten Additive in Frage.

In bevorzugter Ausführungsform enthalten die erfindungsgemäßen Zusammensetzungen als Komponente C

mindestens je eine Komponente ausgewählt aus der Gruppe der Entformungsmittel und Stabilisatoren. In besonders bevorzugter Ausführungsform kommt als Entformungsmittel Pentaerythrittetrastearat zum Einsatz. In besonders bevorzugter Ausführungsform kommt als Stabilisator mindestens eine Verbindung ausgewählt aus der Gruppe der sterisch gehinderten Phenole, der organischen Phosphite und der Brönstedt-sauren Verbindungen zum Einsatz.

Als Komponente C können die erfindungsgemäßen Zusammensetzungen insbesondere auch Flammschutzmittel, beispielsweise halogenierte organische Verbindungen bzw. phosphorhaltige Flammschutzmittel enthalten. Letztgenannte kommen bevorzugt zum Einsatz.

Phosphorhaltige Flammschutzmittel im erfindungsgemäßen Sinne sind bevorzugt ausgewählt aus den Gruppen der mono- und oligomeren Phosphor- und Phosphonsäureester, Phosphonatamine und Phosphazene, wobei auch Mischungen von mehreren Verbindungen ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte mono- und oligomere Phosphor- bzw. Phosphonsäureester sind Phosphorverbindungen der allgemeinen Formel (IV)

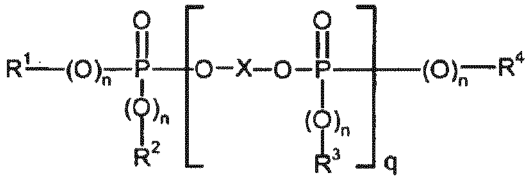

(IV)

worin

R1, R2, R3 und R4, unabhängig voneinander jeweils gegebenenfalls halogeniertes C1 bis C8-Alkyl, jeweils gegebenenfalls durch Alkyl, vorzugsweise C1 bis C4-Alkyl, und/oder Halogen, vorzugsweise Chlor, Brom, substituiertes C5 bis C6-Cycloalkyl, C6 bis C20-Aryl oder C7 bis C12-Aralkyl,

n unabhängig voneinander, 0 oder 1

q 0 bis 30 und

X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R1, R2, R3 und R4 unabhängig voneinander für C1 bis C4-Alkyl, Phenyl, Naphthyl oder Phenyl-C1-C4-alkyl. Die aromatischen Gruppen R1, R2, R3 und R4 können ihrerseits mit Halogen- und/oder Alkylgruppen, vorzugsweise Chlor, Brom und/oder C1 bis C4-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.

n in der Formel (IV) kann, unabhängig voneinander, 0 oder 1 sein, vorzugsweise ist n gleich 1.

q steht für Werte von 0 bis 30. Bei Einsatz von Mischungen verschiedener Komponenten der Formel (IV) können Mischungen vorzugsweise mit zahlengemittelten q-Werte von 0,3 bis 10, besonders bevorzugt 0,5 bis 10, insbesondere 1,05 bis 1,4 verwendet werden.

X steht besonders bevorzugt für

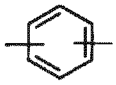, 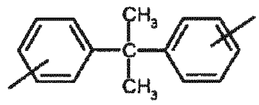, 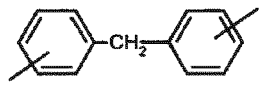,

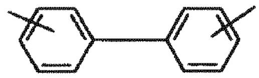

oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Der Einsatz von oligomeren Phosphorsäureestern der Formel (IV), die sich vom Bisphenol A ableiten, ist besonders vorteilhaft, da die mit dieser Phosphorverbindung ausgerüsteten Zusammensetzungen eine besonders hohe Spannungsriss- und Hydrolysebeständigkeit sowie eine besonders geringe Neigung zur Belagsbildung bei der Spritzgussverarbeitung aufweisen. Des Weiteren lässt sich mit diesen Flammschutzmitteln eine besonders hohe Wärmeformbeständigkeit erzielen.

Als erfindungsgemäße Komponente C können Monophosphate (q=O), Oligophosphate (q=1-30) oder Mischungen aus Mono- und Oligophosphaten eingesetzt werden.

Monophosphorverbindungen der Formel (IV) sind insbesondere Tributylphosphat, Tris-(2-chlorethyl)-phosphat, Tris-(2,3-dibrompropyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid oder Trikresylphosphinoxid.

Die Phosphorverbindungen gemäß Formel (IV) sind bekannt (vgl. z.B. EP-A 363 608, EP-A 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Phosphonatamine sind vorzugsweise Verbindungen der Formel (V)

A3-y-NBly (V)

in welcher

A für einen Rest der Formel (Va)

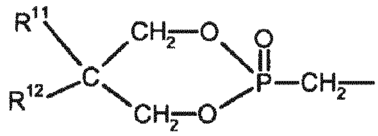

(Va)

oder (Vb)

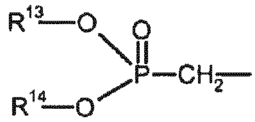

(Vb)

steht,

R11 und R12 unabhängig voneinander für unsubstituiertes oder substituiertes C1-C10-Alkyl oder für unsubstituiertes oder substituiertes C6 bis C10-Aryl, stehen,

R13 und R14 unabhängig voneinander für unsubstituiertes oder substituiertes C1 bis C10-Alkyl oder unsubstituiertes oder substituiertes C6 bis C10-Aryl stehen oder

R13 und R14 zusammen für unsubstituiertes oder substituiertes C3 bis C10-Alkylen stehen,

y die Zahlenwerte 0, 1 oder 2 bedeuten und
B1 unabhängig für Wasserstoff, gegebenenfalls halogeniertes C2 bis C8-Alkyl, unsubstituiertes oder substituiertes C6 bis C10-Aryl steht.

B1 steht vorzugsweise unabhängig für Wasserstoff, für Ethyl, n- oder iso-Propyl, welche durch Halogen substituiert sein können, unsubstituiertes oder durch C1 bis C4-Alkyl und/oder Halogen substituiertes C6 bis C10-Aryl, insbesondere Phenyl oder Naphthyl.

Alkyl in R11, R12, R13 und R14 steht unabhängig vorzugsweise für Methyl, Ethyl, n-Propyl, iso-Propyl, n-, iso-, sek. oder tert.-Butyl, Pentyl oder Hexyl.

Substituiertes Alkyl in R11, R12, R13 und R14 steht unabhängig vorzugsweise für durch Halogen substituiertes C1 bis C10-Alkyl, insbesondere für ein- oder zweifach substituiertes Methyl, Ethyl, n-Propyl, iso-Propyl, n-, iso-, sek. oder tert.-Butyl, Pentyl oder Hexyl.

C6 bis C10-Aryl steht in R11, R12, R13 und R14 unabhängig vorzugsweise für Phenyl, Naphthyl oder Binaphthyl, insbesondere o-Phenyl, o-Naphthyl, o-Binaphthyl, welche durch Halogen (im allgemeinen ein-, zwei- oder dreifach) substituiert sein können.

R13 und R14 können zusammen mit den Sauerstoffatomen, an die sie direkt gebunden sind, und dem Phosphoratom eine Ringstruktur bilden.

Beispielhaft und vorzugsweise werden genannt: 5,5,5',5',5",5"-Hexamethyltris(1,3,2-dioxaphosphorinan-methan)amino-2,2',2"-trioxid der Formel (Va-1)

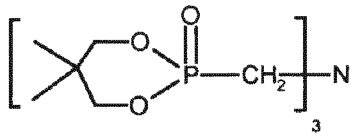

(Va-1)

1,3,2-Dioxaphosphorinan-2-m ethanamin, N-butyl-N[(5,5-dimethyl-1,3,2-dioxaphosphorinan-2-yl)methyl]-5,5-dimethyl-, P,2-dioxide; 1,3,2-Dioxaphosphorinane-2-methanamin, N-[[5"5-dimethyl-1,3,2-dioxaphosphorinan-2-yl)methyl]-5,5-dimethyl-N-phenyl-, P,2-dioxid; 1,3,2-Dioxaphosphorinan-2-methanamin, N,N-dibutyl-5,5-dimethyl-, 2-oxid, 1,3,2-Dioxaphosphorinan-2-methanimin, N-[(5,5-dimethyl-1,3,2-dioxaphosphorinan-2-yl)methyl]-N-ethyl-5,5-dimethyl-, P,2-dioxid, 1,3,2-Dioxaphos-phorinan-2-methanamin, N-butyl-N-[(5,5-dichloromethyl-1,3,2-dioxaphosphorinan-2-yl)-methyl]-5,5-di-chloromethyl-, P,2-dioxid, 1,3,2-Dioxaphosphorinan-2-methanamin, N-[(5,5-di-chloromethyl-1,3,2-dioxaphosphorinan-2-yl)methyl]-5,5-di-chloromethyl-N-phenyl-, P,2-dioxid; 1,3,2-Dioxaphosphorinan-2-methanamin, N,N-di-(4-chlorobutyl)-5,5-dimethyl-2-oxid; 1,3,2-Dioxaphosphorinan-2-methanimin, N-[(5,5-dimethyl-1,3,2-dioxaphosphorinan-2-yl)methan]-N-(2-chloroethyl)-5,5-di(chloromethyl)-, P2-dioxid.

Bevorzugt sind weiterhin:

Verbindungen der Formel (Va-2) oder (Va-3)

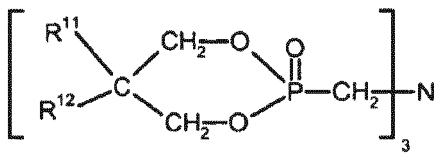

(Va-2)

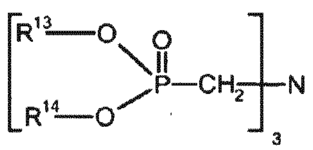

(Va-3)

wobei
R11, R12, R13 und R14 die oben angegebenen Bedeutungen haben.

Besonders bevorzugt sind Verbindungen der Formel (Va-2) und (Va-1). Die Herstellung der Phosphonatamine ist beispielsweise in US-PS 5 844 028 beschrieben.

Phosphazene sind Verbindungen der Formeln (VIa) und (VIb)

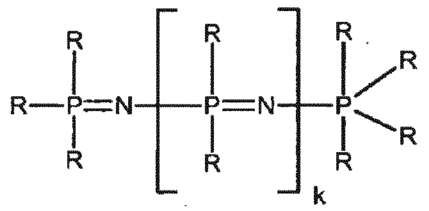

(VIa),

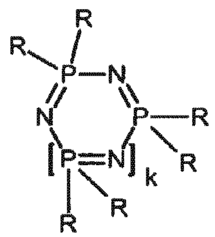

(VIb),

worin

R jeweils gleich oder verschieden ist und für Amino, jeweils gegebenenfalls halogeniertes, vorzugsweise mit Fluor halogeniertes C1 bis C8-Alkyl, oder C1 bis C8-Alkoxy, jeweils gegebenenfalls durch Alkyl, vorzugsweise C1 bis C4-Alkyl, und/oder Halogen, vorzugsweise Chlor und/oder Brom, substituiertes C5 bis C6-Cycloalkyl, C6 bis C20-Aryl, vorzugsweise Phenyl oder Naphthyl, C6 bis C20-Aryloxy, vorzugsweise Phenoxy, Naphthyloxy, oder C7 bis C12-Aralkyl, vorzugsweise Phenyl-C1-C4-alkyl, steht,

k für 0 oder eine Zahl von 1 bis 15, vorzugsweise für eine Zahl von 1 bis 10 steht.

Beispielhaft seien Propoxyphosphazen, Phenoxyphosphazen, Methylphenoxyphosphazen, Aminophosphazen und Fluoralkylphosphazene genannt. Bevorzugt ist Phenoxyphosphazen.

Die Phosphazene können allein oder als Mischung eingesetzt werden. Der Rest R kann immer gleich sein oder 2 oder mehr Reste in den Formeln (VIa) und (VIb) können verschieden sein. Phosphazene und deren Herstellung sind beispielsweise in EP-A 728 811, DE-A 1 961668 und WO 97/40092 beschrieben.

Die Flammschutzmittel können allein oder in beliebiger Mischung untereinander oder in Mischung mit anderen Flammschutzmitteln eingesetzt werden.

Darüber hinaus enthalten flammgeschütze Zusammensetzungen in bevorzugter Ausführungsform die zuvorgenannten Flammschutzmittel in Kombination mit mindestens einem Antidrippingmittel ausgewählt aus den Substanzklassen der fluorierten Polyolefine, der Silikone sowie Aramidfasern. Besonders bevorzugt kommen Polytetrafluorethylen-Polymere als Antidrippingmittel zum Einsatz.

## Herstellung der Formmassen und Formkörper

Die erfindungsgemäßen thermoplastischen Formmassen werden hergestellt, indem man die jeweiligen Bestandteile in bekannter Weise vermischt und bei Temperaturen von 180°C bis 350°C, bevorzugt von 220 bis 320°C, besonders bevorzugt von 230 bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

In einer bevorzugten Ausführungsform wird in einem ersten Schritt die Komponente B1 oder eine Teilmenge der Komponente B1 mit der Komponente B3 oder einer Teilmenge der Komponente B3 zunächst zu einem Präcompound umgesetzt und in einem zweiten Schritt die erfindungsgemäße Zusammensetzung unter Verwendung des so hergestellten Präcompounds produziert.

In einer besonders bevorzugten Ausführungsform wird im ersten Schritt das Pfropfpolymer B1 oder eine Teilmenge der Komponente B1 mit der Komponente B3 oder einer Teilmenge der Komponente B3 zu einem emissionsarmen Präcompound mittels Compoundierung unter Vakuumentgasung compoundiert. Besonders vorteilhaft ist es, bei dieser Entgasungscompoundierung die Komponente B1 in feuchtem Zustand (d.h. in Anwesenheit von Wasser) einzusetzen. Solche Verfahren werden beispielsweise in EP 0 768 157 A1 und EP 0 867 463 A1 beschrieben. Besonders geeignet sind Präcompounds, deren Gesamtgehalt flüchtiger organischer Verbindungen weniger als 1000 mg/kg, bevorzugt weniger als 800 mg/kg, insbesondere weniger als 500 mg/kg beträgt. Im zweiten Verfahrensschritt werden die übrigen Bestandteile und das Präcompound in bekannter Weise vermischt und bei den zuvorgenannten Temperaturen in üblichen

Aggregaten wie Innenknetern, Extrudern und Doppelwellenschnecken schmelzcompoundiert oder schmelzextrudiert. In einer bevorzugten Ausführungsform wird bei diesem zweiten Compoundierungsschritt zwecks weiterer Entgasung flüchtiger Bestandteile (wie z.B. Restmonomere und Restlösungsmittel) ein Druck von <500 mbar, bevorzugt <400 mbar, insbesondere <200 mbar (absolut) angelegt.

Gegenstand der Erfindung ist daher auch ein Verfahren zur Herstellung emissionsarmer erfindungsgemäßer Zusammensetzungen.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karrosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Die erfindungsgemäßen Zusammensetzungen eignen sich besonders auch zur Herstellung von Formkörpern oder Formteilen mit Class-A-Oberflächen-Anforderung und Hochglanz-Finish, welche gegebenenfalls partiell oder vollständig einem weiteren Oberflächenbehandlungsschritt durch beispielsweise Lackierung, Folienhinterspritzung, Metallisierung durch Vakuumbedampfung oder Galvanisierung unterzogen werden.

Unter "hochglänzend" verstanden wird im Sinne der vorliegenden Erfindung ein Glanzgrad ermittelt in Reflexion gemäß DIN 67530 bei einem Messwinkel von 60° von mindestens 95, bevorzugt von mindestens 97, besonders bevorzugt von mindestens 99. Gegenstand der Erfindung sind somit auch Formkörper oder Formteile aus den erfindungsgemäßen Zusammensetzungen mit vollständigem oder partiellen Hochglanz-Finish, welche gegebenenfalls partiell oder vollständig einem weiteren Oberflächenbehandlungsschritt durch beispielsweise Lackierung, Folienhinterspritzung, Metallisierung durch Vakuumbedampfung oder Galvanisierung unterzogen wurden.

## Beispiele

### Komponente A1

Lineares Polycarbonat auf Basis Bisphenol-A mit einem gewichtsgemittelten Molekulargewicht $M_w$ von 28 kg/mol (bestimmt durch GPC in Methylenchlorid bei 25°C mit Polycarbonat als Standard).

### Komponente B1-1

Präcompound aus 50 Gew.-% eines Pfropfpolymerisats vom ABS-Typ, hergestellt im Emulsionspolymerisationsverfahren, mit einem A:B:S-Verhältnis von 12:50:38 Gew.-% und 50 Gew.-% eines Styrol-Acrylnitril-Copolymerisats, hergestellt im Massepolymerisationsverfahren, mit einem Styrol-Acrylnitril-Verhältnis von 76:24 Gew.-% und mit einem per GPC mit Polystyrol als Standard in Dimethylformamid bei 20°C gemessenen gewichtsgemittelten Molekulargewicht $M_w$ von 100 kg/mol. Das für die Herstellung des Präcompounds verwendete Pfropfpolymerisat wurde im basischen Milieu unter Verwendung von Magnesiumsulfat als Fällmittel gefällt und enthält herstellungsbedingt an Alkali- und Erdalkalimetallen 680 ppm Magnesium, 15 ppm Calcium, 130 ppm Kalium und 35 ppm Natrium..

Die Bestimmung des Gehaltes an Alkali- und Erdalkalimetallen in den Emulsionspfropfpolymerisaten gemäß Komponente B1-1 und B1-2 erfolgte wie oben beschrieben.

### Komponente B1-2

Präcompound aus 50 Gew.-% eines Pfropfpolymerisats vom ABS-Typ, hergestellt im Emulsionspolymerisationsverfahren, mit einem A:B:S-Verhältnis von 12:54:34 Gew.-% und 50 Gew.-% eines Styrol-Acrylnitril-Copolymerisats, hergestellt im Massepolymerisationsverfahren, mit einem StyrolAcrylnitril-Verhältnis von 76:24 Gew.-% und mit einem per GPC mit Polystyrol als Standard in Dimethylformamid bei 20°C gemessenen gewichtsgemittelten Molekulargewicht $M_w$ von 100 kg/mol. Das für die Herstellung des Präcompounds verwendete Pfropfpolymerisat wurde im basischen

Milieu unter Verwendung von Magnesiumsulfat als Fällmittel gefällt und enthält herstellungsbedingt an Alkali- und Erdalkalimetallen 700 ppm Magnesium, 10 ppm Calcium, 100 ppm Kalium und 110 ppm Natrium.

**Komponente B2**

n-Butylacrylat-modifiziertes Pfropfpolymerisat vom ABS-Typ, hergestellt im Massepolymerisationsverfahren, mit einem A:B:S-Verhältnis von 21:10:65 Gew.-% und mit einem n-Butylacrylatgehalt von 4 Gew.-%. Der D50-Wert der Pfropfpartikeldurchmesser bestimmt durch Ultrazentrifugation beträgt 0,5 µm. Die dem Pfropfpolymerisat zugrunde liegende Pfropfgrundlage ist ein Styrol-Butadien-Blockcopolymer-Kautschuk (SBR). Der Gelgehalt des Pfropfpolymerisats gemessen in Aceton liegt bei 20 Gew.-%. Das per GPC mit Polystyrol als Standard in Dimethylformamid bei 20°C gemessene gewichtsgemittelte Molekulargewicht $M_w$ des freien, d.h. nicht chemisch an den Kautschuk gebundenen bzw. in den Kautschukpartikeln in für Aceton unlöslicher Form inkludierten n-Butylacrylatmodifizierten SANs beträgt 110 kg/mol.

**Komponente B3**

Styrol-Acrylnitril-Copolymerisat, hergestellt im Massepolymerisationsverfahren, mit einem Styrol-Acrylnitril-Verhältnis von 76:24 Gew.-% und mit einem per GPC mit Polystyrol als Standard in Dimethylformamid bei 20°C gemessenen gewichtsgemittelten Molekulargewicht $M_w$ von 100 kg/mol.

**Komponente C1**

Pentaerythrittetrastearat als Gleit-/Entformungsmittel

**Komponente C2**

Phosphorigsäureester des Bis-(2-hydroxy-3-cyclohexyl-5-methyl-phenyl)-methans mit der Formel

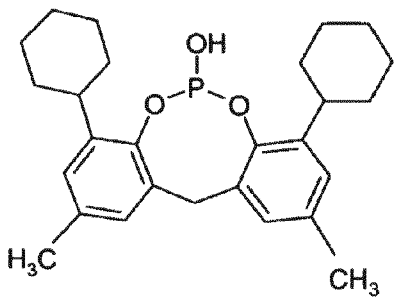
.

**Komponente C3**

Thermostabilisator, Irganox 1076, BASF (Ludwigshafen, Deutschland)

__**Herstellung der Prüfkörper und Prüfung**__

Die Herstellung der Zusammensetzungen erfolgte auf einem Zweiwellenextruder ZSK25 der Fa. Coperion Weener & Pfleiderer (Stuttgart, Deutschland) bei einer Massetemperatur von 260°C und unter Anlegen eines Unterdrucks von 100mbar (absolut). Die aus der jeweiligen Compoundierung resultierenden Granulate wurden auf einer Spritzgussmaschine (Fa. Arburg) bei Schmelzetemperaturen von 260°C und einer Werkzeugtemperatur von 80°C zu Platten der Abmessung 150 mm x 105 mm x 2 mm verarbeitet. Hierbei kam ein hochglanzpoliertes Werkzeug zum Einsatz.

Diese Platten wurden unmittelbar nach dem Spritzguss (das heißt ohne weitere Oberflächenbehandlungs/Beschichtungsschritte) für 3 Tage bei 40°C und 90°C einer Luftatmosphäre mit einer relativen Luftfeuchtigkeit von mindestens 95% ausgesetzt.

Danach erfolgte eine visuelle Begutachtung durch 3 unabhängige Gutachter in Analogie zu dem in der DIN EN ISO 4628-2 beschriebenen Bewertungsschema zur Bewertung des Blasengrades nach Menge und Größe der Schäden. Gemäß DIN EN ISO 4628-2 wird der Blasengrad mit einer Bewertung in der Nomenklatur "xSy" beurteilt, wobei x eine

Aussage über die Anzahl der Blasenschäden und y eine Aussage über deren Größe macht. In der DIN ENISO 4628-2 werden Bilder für Blasengrade mit x und y jeweils unabhängig voneinander von 2-5 vorgestellt, die zur Kalibrierung bei der visuellen Begutachtung dienen. Schädigungen, die weniger sichtbare Blasendefekte als für x=2 in der DIN EN ISO 4628-2 angegeben zeigen, werden mit x=1 bewertet. Analog werden Schädigungen, die kleinere, aber noch visuell ohne Hilfsmittel (Lupe/Mikroskop) sichtbare Blasendefekte als für y=2 in der DIN EN ISO 4628-2 angegeben zeigen, mit y=1 bewertet. Treten keinerlei ohne Hilfsmittel visuell sichtbare Blasendefekte auf, so lautet die Bewertung "0".

*Tabelle 1:* Beispiele

| **Zusammensetzung** | **Beispiel 1** | **Vergleichsbeispiel 1** |
|---|---|---|
| A1 | 60,35 | 60,35 |
| B1-1 | | 23,16 |
| B1-2 | 23,16 | |
| B2 | 8,90 | 8,90 |
| B3 | 6,53 | 6,53 |
| C1 | 0,74 | 0,74 |
| C2 | 0,12 | 0,12 |
| C3 | 0,20 | 0,20 |
| Na/Mg | 0,17 | 0,05 |
| Na/(Mg+Ca) | 0,16 | 0,05 |
| **Eigenschaften** | | |
| Bewertung nach Wärmefeuchtlagerung bei 40°C | 0 | 1S1 - 2S2 |
| Bewertung nach Wärmefeuchtlagerung bei 90°C | 1S1 | 2S2 - 3S3 |

## Patentansprüche

1. Polymerzusammensetzungen bestehend aus

A) 30 bis 85 Gew.-Teile, bezogen auf die Summe aus A und B, eines oder eine Mischung mehrerer thermoplastischer Polymere verschieden von B und
B) 15 bis 70 Gew.-Teile, bezogen auf die Summe aus A und B, aus

B1) mindestens einem im Emulsionspolymerisationsverfahren hergestellten Pfropfpolymerisat,
B2) optional mindestens einem im Masse-, Suspensions- oder Lösungspolymerisationsverfahren hergestellten Pfropfpolymerisat,
B3) optional mindestens einem kautschukfreien Vinyl(co)polymerisat, und

C) 0,3 bis 7 Gew.-Teile mindestens eines handelsüblichen Polymeradditivs,

wobei sich die Summe der Gewichtsteile A und B zu 100 addiert,
**dadurch gekennzeichnet, dass**

(i) das im Emulsionspolymerisationsverfahren hergestellte Pfropfpolymerisat gemäß Komponente B1 mit mindestens einem Erdalkalisalz ausgewählt aus der Gruppe der Magnesium- oder Calciumsalze in basischem Milieu (pH > 7) gefällt wurde,
und
(ii) das im Emulsionspolymerisationsverfahren hergestellte Pfropfpolymerisat gemäß Komponente B1 herstellungsbedingt mindestens ein Natriumsalz und mindestens ein Erdalkalisalz gemäß (i) enthält, wobei die Metallionen im molaren Verhältnis Na/(Mg+Ca) von mindestens 0,15 und maximal 0,5 vorliegen

wobei Komponente B1 mehr als 100 ppm und weniger als 2000 ppm Magnesium und/oder Calcium enthält,

wobei die Magnesium- oder Calciumsalze ausgewählt sind aus der Gruppe der Sulfate und Chloride,
wobei Komponente B aus mindestens zwei Komponenten ausgewählt aus der Gruppe bestehend aus B1, B2 und B3 besteht,
wobei das thermoplastische Polymer gemäß Komponente A ausgewählt ist aus der Gruppe, die Polycarbonate, Polyestercarbonate, Polyester sowie Mischungen daraus umfaßt.

2. Polymerzusammensetzungen gemäß einem der vorhergehenden Ansprüche, **dadurch gekennzeichnet, dass** das Erdalkalisalz Magnesiumsulfat ist.

3. Polymerzusammensetzungen gemäß einem der vorhergehenden Ansprüche, **dadurch gekennzeichnet, dass** das Natriumsalz in Komponente B1 ausgewählt ist aus der Gruppe, die Natriumsulfat, Natriumchlorid und Natriumsalze der Phosphorsäure umfaßt.

4. Polymerzusammensetzungen gemäß einem der vorhergehenden Ansprüche, **dadurch gekennzeichnet, dass** die Zusammensetzung als Komponente C mindestens einen Vertreter ausgewählt aus der Gruppe bestehend aus Flammschutzmitteln, Flammschutzsynergisten, rauchhemmenden Additiven, Antidrippingmitteln, internen und externen Gleit- und Entformungsmitteln, Fließfähigkeitshilfsmitteln, Antistatika, Leitfähigkeitsadditiven, UV-Stabilisatoren, Licht-Stabilisatoren, Thermostabilisatoren, Antioxidantien, Umesterungsinhibitoren, Hydrolyseschutzmittel, antibakteriell wirkenden Additiven, kratzfestigkeitsverbessernden Additiven, IR-Absorbentien, optischen Aufhellern, fluoreszierenden Additiven, Füll- und Verstärkungsstoffen, Säuren sowie Farbstoffen und Pigmenten enthält.

5. Verfahren zur Herstellung von Pfropfpolymeren B1 zur Verwendung in Polymerzusammensetzungen nach einem der vorhergehenden Ansprüche, **dadurch gekennzeichnet, daß** die Komponente B1 gefällt wird mit einer wäßrigen Lösung enthaltend mindestens ein Magnesium- und/oder Calciumsalz und mindestens ein Natriumsalz.

6. Verfahren zur Herstellung von Pfropfpolymeren B1 zur Verwendung in Polymerzusammensetzungen nach einem der Ansprüche 1 bis 4, **dadurch gekennzeichnet, daß** die Komponente B1 gefällt wird mit einer wäßrigen Lösung enthaltend mindestens ein Magnesium- und/oder Calciumsalz, und in einem dieser Fällung nachgeschalteten Verfahrensschritt zur so erhaltenen Koagulatdispersion eine wässrige Lösung eines Natriumsalzes hinzugegeben wird, noch bevor das Koagulat vom Wasser getrennt beziehungsweise getrocknet wird.

7. Verfahren nach einem der Ansprüche 5 und 6, **dadurch gekennzeichnet, daß** die wäßrige Lösungen keine festen Bestandteile aufweisen.

8. Formkörper oder Formteile aus einer Polymerzusammensetzung gemäß einem der Ansprüche 1 bis 4 mit Class-A-Oberfläche und partiellem oder vollständigem Hochglanz-Finish, **gekennzeichnet durch** einen Glanzgrad in diesen Hochglanzbereichen von mindestens 95 ermittelt in Reflexion gemäß DIN 67530 bei einem Messwinkel von 60°, welche gegebenenfalls partiell oder vollständig einem weiteren Oberflächenbehandlungsschritt durch beispielsweise Lackierung, Folienhinterspritzung, Metallisierung durch Vakuumbedampfung oder Galvanisierung unterzogen sein können.

## Claims

1. Polymer compositions consisting of

A) 30 to 85 parts by weight, based on the sum total of A and B, of a thermoplastic polymer or a mixture of a plurality of thermoplastic polymers different from B and
B) 15 to 70 parts by weight, based on the sum total of A and B, of

B1) at least one graft polymer produced by the emulsion polymerization process,
B2) optionally at least one graft polymer produced by the bulk, suspension or solution polymerization process,
B3) optionally at least one rubber-free vinyl (co)polymer, and

C) 0.3 to 7 parts by weight of at least one commercially available polymer additive,

wherein the sum total of parts by weight A and B is 100,

**characterized in that**

(i) the graft polymer produced by the emulsion polymerization process in accordance with component B1 was precipitated with at least one alkaline earth metal salt selected from the group of magnesium or calcium salts in basic medium (pH > 7),
and
(ii) the graft polymer produced by the emulsion polymerization process in accordance with component B1 comprises, as a result of the preparation, at least one sodium salt and at least one alkaline earth metal salt in accordance with (i), wherein the metal ions are present at a molar ratio Na/(Mg+Ca) of at least 0.15 and at most 0.5

wherein component B1 comprises more than 100 ppm and less than 2000 ppm magnesium and/or calcium,
wherein the magnesium or calcium salts are selected from the group of sulfates and chlorides,
wherein component B consists of at least two components selected from the group consisting of B1, B2 and B3,
wherein the thermoplastic polymer in accordance with component A is selected from the group comprising polycarbonates, polyester carbonates and mixtures thereof.

2. Polymer compositions according to any of the preceding claims, **characterized in that** the alkaline earth metal salt is magnesium sulfate.

3. Polymer compositions according to any of the preceding claims, **characterized in that** the sodium salt in component B1 is selected from the group comprising sodium sulfate, sodium chloride and sodium salts of phosphoric acid.

4. Polymer compositions according to any of the preceding claims, **characterized in that** the composition comprises, as component C, at least one representative selected from the group consisting of flame retardants, flame retardant synergists, smoke-inhibiting additives, antidripping agents, internal and external lubricants and demoulding agents, flowability aids, antistats, conductivity additives, UV/light stabilizers, thermal stabilizers, antioxidants, transesterification inhibitors, hydrolysis stabilizers, antibacterial additives, scratch resistance-improving additives, IR absorbents, optical brighteners, fluorescent additives, fillers and reinforcers, acids, and dyes and pigments.

5. Process for producing graft polymers B1 for use in polymer compositions according to any of the preceding claims, **characterized in that** the component B1 is precipitated with an aqueous solution comprising at least one magnesium and/or calcium salt and at least one sodium salt.

6. Process for producing graft polymers B1 for use in polymer compositions according to any of Claims 1 to 4, **characterized in that** the component B1 is precipitated with an aqueous solution comprising at least one magnesium and/or calcium salt, and an aqueous solution of a sodium salt is added to the coagulate dispersion thus obtained in a process step downstream of this precipitation, before the coagulate is separated from the water or is dried.

7. Process according to either of Claims 5 and 6, **characterized in that** the aqueous solutions do not comprise any solid constituents.

8. Moulding or moulded part formed from a polymer composition according to any of Claims 1 to 4 having class A surface and partial or full high-gloss finish, **characterized by** a gloss level in said high-gloss regions of at least 95, determined by reflection in accordance with DIN 67530 at a measuring angle of 60°, which may optionally have been subjected partially or fully to a further surface treatment step, for example, by lacquering, in-mould coating of foils, metallization via vacuum depositing or electroplating.

## Revendications

1. Compositions de polymère constituées de

A) 30 à 85 parties en poids, par rapport à la somme de A et B, d'un polymère thermoplastique ou d'un mélange de plusieurs polymères thermoplastiques différent(s) de B
B) 15 à 70 parties en poids, par rapport à la somme de A et B, de

B1) au moins un polymérisat greffé préparé dans un procédé de polymérisation en émulsion,
B2) éventuellement au moins un polymérisat greffé préparé dans un procédé de polymérisation en masse,

en suspension ou en solution,
B3) éventuellement au moins un (co)polymérisat de vinyle exempt de caoutchouc, et

C) 0,3 à 7 parties en poids d'au moins un additif de polymère disponible dans le commerce,

la somme des parties en poids de A et B s'additionnant jusqu'à 100,
**caractérisées en ce que**

(i) le polymérisat greffé préparé dans un procédé de polymérisation en émulsion selon le composant B1 a été précipité en milieu basique (pH > 7) avec au moins un sel de métal alcalino-terreux choisi dans le groupe des sels de magnésium et des sels de calcium,
et
(ii) le polymérisat greffé préparé dans un procédé de polymérisation en émulsion selon le composant B1 contient de part sa préparation au moins un sel de sodium et au moins un sel de métal alcalino-terreux selon (i), les ions métalliques étant présents en un rapport molaire Na/ (Mg + Ca) d'au moins 0,15 et d'au maximum 0,5

le composant B1 contenant plus de 100 ppm et moins de 2000 ppm de magnésium et/ou de calcium,
les sels de magnésium ou de calcium étant choisis dans le groupe des sulfates et des chlorures,
le composant B étant constitué d'au moins deux composants choisis dans le groupe constitué par B1, B2 et B3,
le polymère thermoplastique selon le composant A étant choisi dans le groupe qui comprend des polycarbonates, des polyestercarbonates, des polyesters ainsi que des mélanges correspondants.

2. Compositions de polymère selon l'une quelconque des revendications précédentes, **caractérisées en ce que** le sel de métal alcalino-terreux est le sulfate de magnésium.

3. Compositions de polymère selon l'une quelconque des revendications précédentes, **caractérisées en ce que** le sel de sodium dans le composant B1 est choisi dans le groupe qui comprend le sulfate de sodium, le chlorure de sodium et des sels de sodium de l'acide phosphorique.

4. Compositions de polymère selon l'une quelconque des revendications précédentes, **caractérisées en ce que** la composition contient, en tant que composant C, au moins un représentant choisi dans le groupe constitué par des ignifugeants, des synergistes d'ignifugation, des additifs d'inhibition de fumée, des agents antigoutte, des agents lubrifiants et de démoulage internes et externes, des auxiliaires de fluidité, des antistatiques, des additifs de conductivité, des stabilisants UV, des stabilisants à la lumière, des stabilisants thermiques, des antioxydants, des inhibiteurs de transestérification, des agents de protection contre l'hydrolyse, des additifs à effet antibactérien, des additifs améliorant la résistance aux rayures, des absorbants IR, des azurants optiques, des additifs fluorescents, des charges et des matières de renforcement, des acides ainsi que des colorants et des pigments.

5. Procédé pour la préparation de polymères greffés B1 pour une utilisation dans des compositions de polymère selon l'une quelconque des revendications précédentes, **caractérisé en ce que** le composant B1 est précipité avec une solution aqueuse contenant au moins un sel de magnésium et/ou un sel de calcium et au moins un sel de sodium.

6. Procédé pour la préparation de polymères greffés B1 pour une utilisation dans des compositions de polymère selon l'une quelconque des revendications 1 à 4, **caractérisé en ce que** le composant B1 est précipité avec une solution aqueuse contenant au moins un sel de magnésium et/ou un sel de calcium, et dans une étape de procédé subséquente à cette précipitation, une solution aqueuse d'un sel de sodium est ajoutée à la dispersion de coagulat ainsi obtenue, encore avant que le coagulat ne soit séparé de l'eau, respectivement séché.

7. Procédé selon l'une quelconque d'revendication 5 et 6, **caractérisé en ce que** les solutions aqueuses ne présentent aucun ingrédient solide.

8. Corps moulés ou pièces moulées composé(e)s d'une composition de polymère selon l'une quelconque des revendications 1 à 4 doté(e)s d'une surface de classe A et d'un fini brillant total ou partiel, caractérisé(e)s par un degré de brillance dans ces domaines de brillance d'au moins 95 déterminé en réflexion selon la norme DIN 67530 à un degré de mesure de 60°, qui peuvent être éventuellement soumis(es) partiellement ou totalement à une étape de traitement de surface par, par exemple, laquage, surmoulage de feuille, métallisation par vaporisation sous vide ou galvanisation.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 459161 B1
- DE 2021398
- DE 2815098
- EP 2373743 A
- WO 2009071537 A
- WO 9828344 A
- DE AS1495626 B
- DE 232877 A2
- DE 703376 A2
- DE 2714544 A
- DE 3000610 A
- DE 3832396 A
- DE 3077934 A
- DE 2842005 A
- US 3419634 A
- DE 3334782 A
- DE 2940024 A
- DE 3007934 A
- EP 363608 A
- EP 640655 A
- US 5844028 A
- EP 728811 A
- DE 1961668 A
- WO 9740092 A
- EP 0768157 A1
- EP 0867463 A1


### In der Beschreibung aufgeführte Nicht-Patentliteratur


- Schnell. Chemistry and Physics of Polycarbonates. Interscience Publishers, 1964
- **W. SCHOLTAN ; H. LANGE.** *Kolloid, Z. und Z. Polymere,* 1972, vol. 250, 782-1796
- **M. HOFFMANN ; H. KRÖMER ; R. KUHN.** Polymer-analytik I und II. Georg Thieme-Verlag, 1977
- Ullmanns Enzyklopädie der technischen Chemie. 1979, vol. 18, 301
- **HOUBEN-WEYL.** Methoden der organischen Chemie. vol. 12/1, 43
- Beilstein. vol. 6, 177